# EUROPEAN PATENT SPECIFICATION

(11) **EP 3 296 272 B1**
(45) Date of publication and mention of the grant of the patent: **18.01.2023**
(21) Application number: 17191918.6
(22) Date of filing: 19.09.2017
(51) Int. Cl.: C03B 33/03, C03B 33/037

(54) **GLASS SHEET CUTTING MACHINE**
GLASSCHEIBENSCHNEIDEMASCHINE
MACHINE POUR DÉCOUPER DES FEUILLES DE VERRE

(30) Priority: 19.09.2016 IT 201600093926
(43) Date of publication of application: 21.03.2018
(73) Proprietor: Bottero S.p.A., 12100 Cuneo (IT)
(72) Inventor: ABELLO, Davide, 12100 Cuneo (IT); ARNAUDO, Fabio, 12100 Cuneo (IT); GHINAMO, Leonardo, 12100 Cuneo (IT)
(74) Representative: Lovino, Paolo

(56) References cited:
- EP-A1- 1 566 365
- EP-A1- 2 583 951
- EP-A1- 2 845 840
- EP-A1- 3 059 649
- JP-A- 2010 173 902

## Description

The present invention relates to a glass sheet cutting machine, provided with a system for positioning a glass sheet, which then has to be cut. In particular, without loss of generality, the following description refers to the positioning of a sheet, commonly called a "cut piece", which has first been cut from a relatively large main sheet, then rotated by 90° and has to be cut again, along a cutting line orthogonal to the previous one.

Glass sheet cutting machines are known provided with an air-cushion horizontal plane, whereupon the glass sheets are placed and advanced along a longitudinal direction. In order to be cut, the glass sheet must be arranged longitudinally in a pre-determined position, at a cutting bridge. After positioning, the glass sheet is cut along a transverse line and then broken, so as to break off a piece of the sheet, arranged downstream and commonly called a "cut piece", from a remaining part of sheet, arranged upstream.

The glass sheet is generally translated by means of movement systems, which are arranged in longitudinal grooves of the support table and are defined, for example, by conveyor belts or by longitudinally movable suction cups.

As regards positioning, which precedes the cutting operations, a known solution comprises a transverse row of stop pins, arranged downstream of the cutting bridge and supported by an abutment bridge, provided below the rest surface. Thanks to a relative translation of the abutment bridge and glass sheet in a longitudinal direction, a front edge of the latter rests against the stop pins and consequently, is automatically positioned perfectly orthogonal to the longitudinal direction. This operation is generally called "squaring". At this point, the glass sheet is locked in relation to the abutment bridge, for example by means of suction cups and is translated backwards, moving the abutment bridge until reaching the pre-determined position in which the cutting operations are carried out.

The cut piece must usually undergo further cutting operations, along lines orthogonal to the previous one. In some known solutions, the cut piece is rotated by 90°, squared again and positioned at the cutting bridge again for cutting in the same machine.

In general, in this new squaring operation, the smaller side of the cut piece rests against a limited number of stop pins, on the abutment bridge and not on the whole row. If the length of the smaller side is very small, the automatic squaring according to the aforesaid prior art could result in positioning errors.

Indeed, if the smaller side of the cut piece is so small that it only rests against two stop pins, any slight error of alignment between these two pins would be magnified by the unfavourable length ratio between the sides of the cut piece. And if the smaller side of the cut piece were even smaller so that it was only resting against one stop pin, it would be impossible to carry out squaring with the prior art.

Cutting machines with glass sheet rotating system are disclosed for example in EP 2 845 840 A1 and EP 1 566 365 A1.

It is the object of the present invention to realize a glass sheet cutting machine, which allows the aforesaid drawbacks to be overcome in a simple and cheap manner.

A glass sheet cutting machine, as defined in claim 1, is realized according to the present invention.

The invention will now be described with reference to the accompanying drawings, which illustrate a non-limiting embodiment, wherein:
- figure 1 is a schematic top view which illustrates a preferred embodiment of the glass sheet cutting machine according to the present invention; and
- figures 2 to 5 are perspective views which illustrate a sequence of steps relating to an automated positioning system performed on the machine in figure 1.

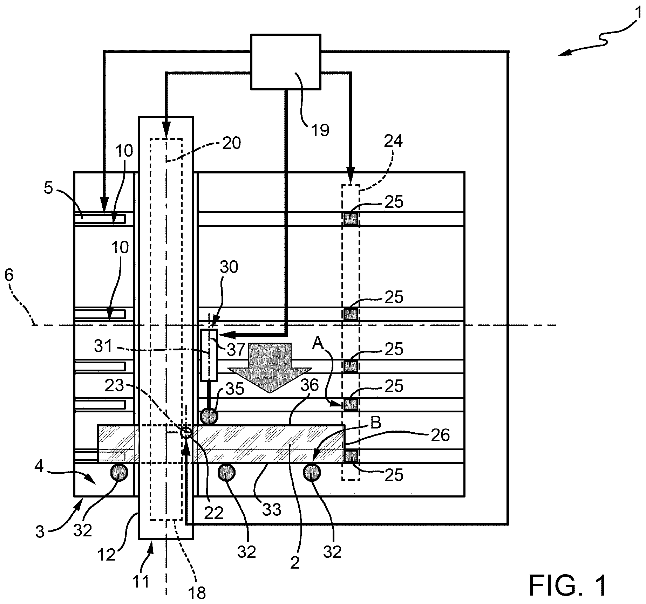

In figure 1, reference number 1 globally indicates a glass sheet cutting machine (illustrated partially and schematically). The illustrated glass sheet is indicated by reference number 2 and is defined, in particular, by a sheet, which has been cut from a larger main sheet (not illustrated) and then rotated by approximately 90°.

The machine 1 comprises a cutting table 3 defining a horizontal support surface 4 for resting sheets. In particular, the table 3 is provided with air pressure supply systems for generating an air cushion on the support surface 4 and consequently reducing friction between the glass and the support surface 4.

The machine 1 also comprises one or more movement devices 5 for translating the glass sheets along a rectilinear longitudinal direction 6 on the support surface 4. Conveniently, the devices 5 are of the type comprising suction cups or conveyor belts, housed in longitudinal grooves 10 made in the cutting table 3 at the support surface 4. The devices 5 transfer the glass sheets in an advancing direction from one inlet towards an outlet of the machine 1 (from left to right in figure 1) along the direction 6, through a cutting station 11 comprising at least one cutting bridge 12, transverse to the direction 6 and arranged above the support surface 4, in a vertically spaced apart position from the latter.

The cutting station 11 comprises a cutting unit 18, known in itself and not described in detail, associated with the bridge 12 and controlled by a control unit 19 so as to perform the necessary cutting operations, in other words controlled so as to cut the glass sheets along one or more cutting lines parallel to a horizontal cutting direction 20, orthogonal to the direction 6, and then cut off the glass sheets. As indicated above, such operations allow the sheet 2 to be broken off in relation to a remaining part of the sheet, not illustrated, arranged upstream of the cutting line (considering the advancing direction described above). The sheet 2 is normally called a "cut piece".

The unit 18 and the bridge 12 are arranged in a fixed longitudinal position in relation to the cutting table 3. However, the present invention could also be applied to machines, wherein the unit 18 and/or bridge 12 are sliding along the direction 6. Moreover, the present invention applies both to machines for monolithic glass sheet cutting, also called float glass, and laminated glass sheet cutting machines.

Again with reference to what is illustrated schematically in figure 1, the machine 1 comprises a rotating device 22, also known in itself and not described in detail, for example of the type comprising a motorized rotating suction cup or a motorized rotating gripper. The device 22 is controlled by the unit 19 so as to take the sheet 2 after cutting and then make a rotation around a vertical axis 23. The device 22 is operated, in particular, if the sheet 2 requires further cutting according to one or more cutting lines transverse to the previous one, in the same cutting station 11.

The machine 1 also comprises an abutment bridge 24.

The bridge 24 is preferably arranged below the support surface 4 and downstream of the cutting station 11, in the advancing direction of the glass sheets along the direction 6, and it is movable along the direction 6, under the action of an actuator (not illustrated) controlled by the unit 19. The bridge 24 supports a row of stop pins 25, which engage respective grooves 10; they are aligned with one another along a horizontal axis orthogonal to the direction 6 and are movable, under the action of one or more actuators (not illustrated) controlled by the unit 19, between a lowered position and a raised position. In the lowered position, the pins 25 are arranged below the support surface 4, while in the raised position, they protrude upwards in relation to the support surface 4, so as to define a reference shoulder A for a front edge 26 of the glass sheets, facing the outlet of the machine 1.

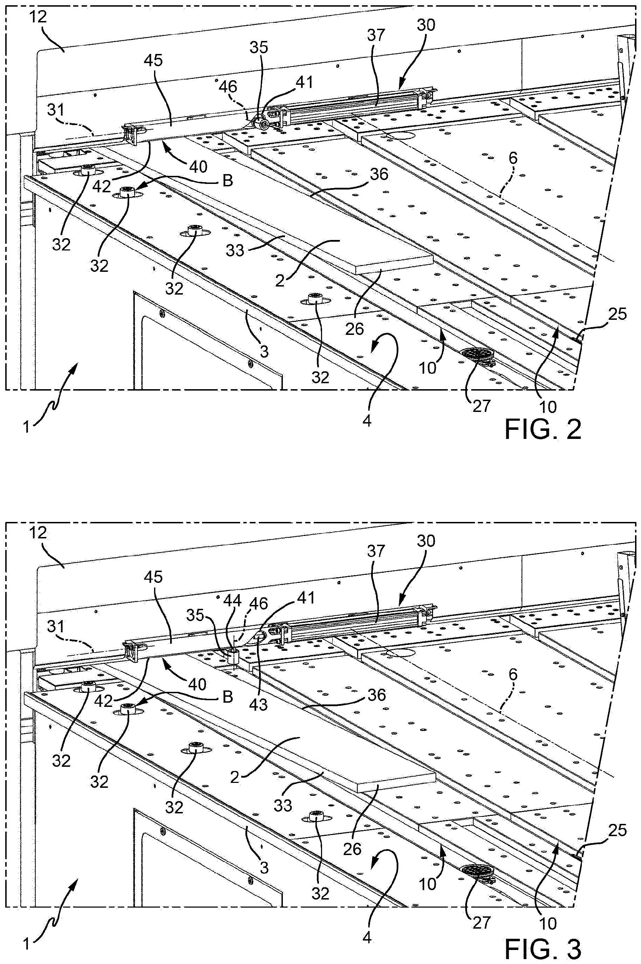

Advantageously, as is visible in figures 2-5, the bridge 24 supports one or more suction cups 27, which are sliding in the grooves 10 and can be activated by the unit 19 to take the lower surface of the glass sheets. According to a preferred, non-illustrated variation, the device 22 is supported by the bridge 24, therefore it is movable longitudinally with the latter. For example, the suction cup 27 in figures 2-5 constitutes part of the device 22.

The shoulder A, defined by the assembly of pins 25, is arranged orthogonally to the direction 6 and is used for orienting relatively large glass sheets correctly and automatically, before the aforesaid cutting operations. Such positioning is commonly known as "squaring" and consists of placing the glass sheet against the shoulder A, respectively, thanks to a relative longitudinal movement. In this way, the front edge of the glass sheet engages all of the pins 25 and is arranged orthogonally to the direction 6. The relative longitudinal movement can be obtained by operating the device 5, or more commonly by translating the pins 25 and/or bridge 24 towards the front edge 26 (in other words towards the bridge 12).

After squaring, the glass sheet is locked, for example by means of the suction cup 27, in the position obtained. Finally, the glass sheet is translated backwards towards the cutting station 11, for example by operating the bridge 24, so as to arrange the glass sheet longitudinally in the pre-determined position in which the cutting operations are to be carried out.

As is visible in figure 1, the sheet 2 is defined by a rectangle having a relatively small shorter side, as the front edge 26. For example, the length of the front edge 26 is inferior to the distance between two consecutive pins 25, so, theoretically, it could rest on only one of the pins 25. Therefore, the squaring on the sheet 2 is carried out by means of a second system controlled by the unit 19 and different to the first automated squaring system described above for the relatively large sheets (and defined by the pins 25 in conjunction with the longitudinal movement caused by the device 5 and/or by the bridge 24).

The second automated squaring system comprises a reference shoulder B, arranged parallel to the direction 6 along a side portion of the support surface 4; and a movement device 30 controlled by the unit 19 so as to push the sheet 2 along an axis 31 transverse to the direction 6 against the shoulder B. The axis 31 is preferably rectilinear, horizontal and orthogonal to the direction 6 and eccentric in relation to the direction 20 (fig.1).

Advantageously, the shoulder B is defined by a row of reference pins 32, aligned and spaced apart from one another along a horizontal axis parallel to the direction 6. In particular, the pins 32 are movable between a lowered position and a raised position under the action of one or more actuators (not illustrated) controlled by the unit 19: in one of such positions, the pins 32 are at such a height as to define the shoulder B for resting one side edge 33 of the sheet 2, while in the other position, they are outside the space provided on the support surface 4 for the thickness of the glass sheets. In detail, the pins 32 define the shoulder B in the raised position, while in the lowered position they are housed inside the cutting table 3.

Advantageously, the pins 32 are defined by respective rollers, which are rotatable around respective vertical axes when they define the shoulder B. In particular, such rollers are idly rotatable.

In the preferred illustrated case, the device 30 is arranged completely above the support surface 4 and, advantageously, it is supported by the bridge 12.

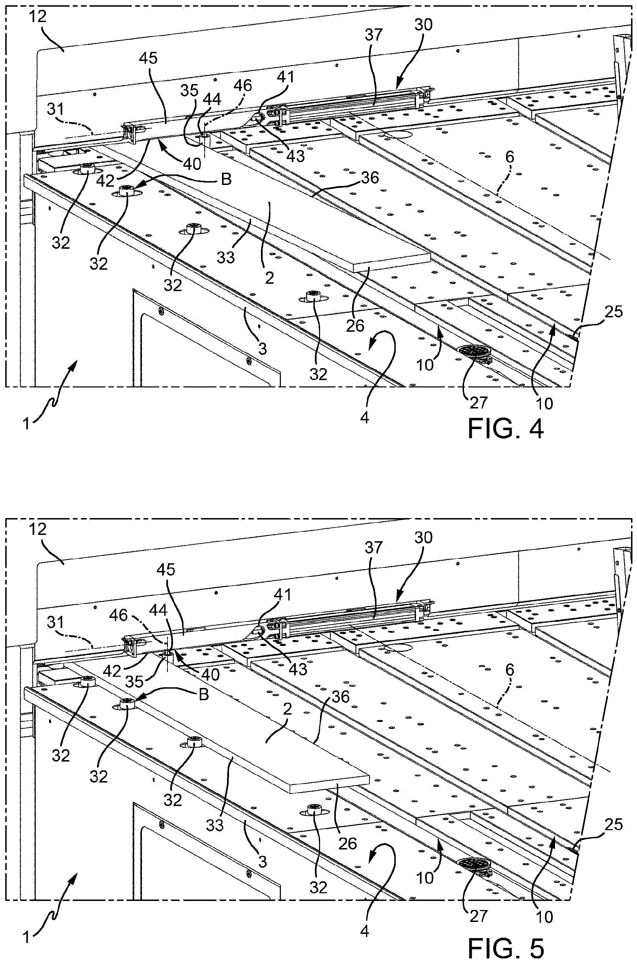

According to a preferred embodiment, the device 30 comprises a pushing member 35, which is movable between a raised inactive position and a lowered active position. In the lowered position (figures 4-5), the member 35 is arranged above the support surface 4 at such a height as to engage against a side edge 36 of the sheet 2, opposite the side edge 33. In the raised position (figure 2), the member 35 is outside the space provided on the support surface 4 for the thickness of the glass sheets that have to be transferred.

The device 30 also comprises an actuator 37 controlled by the unit 19 so as to move the member 35 along the axis 31, and consequently exert a thrust on the side edge 36 towards the shoulder B (figures 4-5) when the member 35 is active. Preferably, but not exclusively, the actuator 37 is a linear actuator, of a pneumatic, hydraulic or electric type. For example, the actuator 37 is a double-acting cylinder. According to non-illustrated variations, the actuator 37 could be defined by a rotary engine and/or could operate the member 35 by means of an additional transmission.

Advantageously, the device 30 is arranged downstream of the bridge 12, considering the advancing direction of the sheets along the direction 6. In particular, the actuator 37 is fixed to the bridge 12. Conveniently, the actuator is fixed by means of brackets to a front face of the bridge 12, which is turned towards the outlet of the machine 1.

The device 30 is preferably configured so as to move the member 35 between the active and inactive positions by means of operating the actuator 37, without requiring additional actuators.

In particular, with reference to figure 3, the device 30 comprises a guide 40, which is fixed in relation to the support surface 3; it cooperates with the member 35 and comprises two different guide portions 41,42: portion 41 is shaped (for example like a propeller) so as to move the member 35 between the active and inactive positions at one end of the travel along the axis 31; portion 42 is rectilinear parallel to the axis 31 for keeping the member 35 in the active position for the remaining part of the travel.

More specifically, the device 30 comprises a stem 43, which extends along the axis 31; it is operated by the actuator 37 and is connected to the member 35 by means of a radial arm 44, sliding in the guide 40. At the same time, the member 35 is free to rotate around the axis 31. The guide 40 is preferably defined by a groove realized in a case 45, which houses the stem 43 and is coaxial to the actuator 37.

The member 35 is preferably defined by a roller, idly rotating around one of its axes 46, which is radial in relation to the axis 31. The axis 46 is substantially vertical when the member 35 is arranged in the active position.

With reference to figures 1 and 5, the thrust exerted by the device 30 on the sheet 2 along the axis 31 causes a perfect alignment of the side edge 33 along the shoulder B, consequently allowing squaring of the sheet 2. The squaring is precise as the side edge 33 is relatively long and therefore rests on a significant width of the shoulder B, in other words on an elevated number of pins 32.

At this point, with reference to figure 1, it is possible to translate the sheet 2 longitudinally and arrange it in the desired cutting position below the bridge 12, while the unit 19 keeps the position stable obtained by the second automated squaring system. In particular, the bridge 24 is translated towards the bridge 12 so as to rest at least one of the pins 25 on the front edge 26 and consequently push the sheet 2 backwards by means of such pin 25. At the same time, the device 30 is controlled so as to continue pushing the side edge 36 and keep the side edge 33 resting against the shoulder B. During this longitudinal translation to reach the desired cutting position, the side edge 33 runs on the pins 32, and the side edge 36 runs on the member 35. The fact that the pins 32 and/or member 35 are defined by idle rollers allows the friction to be reduced.

According to non-illustrated variations, the member 35 is replaced by a gripper or by a suction cup or by a transverse conveyor belt, acting on the upper face and/or on the lower face of the glass sheet, which has to be pushed against the shoulder B.

According to further, non-illustrated variations, the device 30 is arranged below the support surface 4. In these cases, if the device 30 has a pusher, like the member 35, the latter is active when raised, and it is inactive when lowered. As an alternative to the member 35, it is advantageous to use a suction cup, arranged below the support surface and operated by an actuator controlled by the unit 19 to move transversally.

In particular, this suction cup could be defined by the suction cup 27 in figures 2-5, transversally movable (also by just a few centimetres) in relation to the bridge 24 and with transverse play in the respective groove 10. At most, as indicated above, the suction cup 27 could also be equipped with a rotating movement for defining the device 22 and so, in this embodiment, it would serve three functions (in other words: gripping and transfer of the glass sheet in a longitudinal direction; gripping and rotation of the glass sheet; gripping and thrust of the glass sheet towards the shoulder B).

According to one aspect of the invention, in order to orient the glass sheet correctly, which then has to undergo the cutting operations, the unit 19 is configured so as to choose whether to command the first or the second automated squaring system automatically according to the shape of the sheet and/or according to the length of at least one of the edges of the sheet.

For example, the unit 19 determines whether the front edge 26 has a greater length than a given threshold, or whether the ratio between the lengths of the edges 26 and 33 is greater than a given threshold (typically from 0 to 0.2), in order to be able to use the first automated squaring system efficiently. In particular, such thresholds are memorized in the unit 19 and can be defined by absolute values or by variable values based on the operating conditions and/or the dimensional features of the machine 1 (for example the distance between two consecutive pins 25).

The information about the shape and/or about the dimensions of the sheet is contained (implicitly or explicitly) in a cutting program, which is memorized in the unit 19. Alternatively, or in conjunction with the cutting program information, the unit 19 could receive signals from opportune sensors (for example video cameras or cameras) used to determine the shape and/or planar dimensions of the sheet to be squared and then cut.

Depending on the outcome of the automatic evaluation carried out by the unit 19, the unit 19 commands the selected squaring system, in other words the first automated squaring system (that is the bridge 24 and/or the device 5), to position the front edge 26 on the shoulder A, or the second automated squaring system (that is the actuator 37) to position the side edge 33 on the shoulder B.

From the above, it is evident how the described, claimed solution has two automated squaring systems, which define shoulders A and B orthogonal to each other, and they are chosen automatically by the unit 19 and alternatively, to each other, depending on the typology of sheet to be cut. In particular, the second automated squaring system is selected if it is necessary to orient precisely sheets 2 that have a relatively short smaller side, facing the outlet of the machine 1. It follows that the machine 1 is extremely flexible and requires no intervention by operators as it autonomously uses the best squaring, case by case.

For the second automated squaring system, the member 35 or suction cup arranged below the support surface 4 allow actions to be avoided on the upper surface of the sheet, so they do not damage any surface coatings on the sheet itself.

At the same time, the proposed solutions are extremely simple. In particular, the device 30 described above is extremely simple to make in terms of construction, it has a limited number of pieces and a contained cost. Additionally, the device 30 takes up a limited space, it requires no significant modifications to the machines currently in production to be installed and it could even be mounted onto machines already in operation, updating the control unit software.

Furthermore, the installation of the device 30 onto the bridge 12 (or onto the bridge 24) allows a support to be used, which is normally present on cutting machines.

Furthermore, when the sheet 2 has to be translated longitudinally and arranged in the desired cutting position, the interaction between the side edge 36 and the member 35 does not change the operating conditions of such translation, but it allows the squaring to be maintained in an extremely simple and efficient manner.

From the above it is evident that modifications and variations can be made to the machine 1, described with reference to the accompanying figures, which do not go beyond the protective scope of the present invention, as defined in the accompanying claims.

In particular, as stated above, the device 30 could have different structural characteristics to the ones described, and/or it could be positioned and/or supported differently. For example, the device 30 could be arranged upstream of the bridge 12.

Furthermore, the device 22 could be arranged in different positions to the illustrated position, or even absent.

Furthermore, the longitudinal movement of the glass, in the one or the other of the two directions, could be obtained by different means to those described above. For example, the shoulder B could also define a pulling system, as well as a side reference (in this regard, at least one of the rollers defining the pins 32 could be motorized to rotate around its own axis).

Furthermore, the first automated squaring system could comprise components different to the pins 25 and/or the bridge 24: for example, the shoulder A could be supported by a check and/or thrust bridge arranged upstream of the bridge 12: in this case, during squaring, the shoulder A rests on a rear side of the sheet, facing the inlet of the machine 2; and/or the shoulder A could be supported by a bridge arranged above the support surface 4.

Furthermore, the cutting station 11 could be replaced by two stations spaced apart from each other longitudinally, where the incision and cutting off operations are carried out respectively (the present invention can be applied at only one or both of such stations).

Finally, the machine 1 could include the possibility of manually selecting which of the two squaring systems to use, in addition to the automatic selection function performed by the unit 19.

## Claims

1. A glass sheet cutting machine (1), comprising:
- a support surface (4) for at least one glass sheet to be cut (2); said support surface extending along a horizontal longitudinal direction (6) from an inlet to an outlet;
- a control unit (19);
- a cutting unit (18) controlled by said control unit (19) so as to carry out at least one cutting operation at a cutting bridge (12), in a cutting direction (20) transverse to the longitudinal direction (6);
- a first squaring system comprising:
a) a first reference shoulder (A) arranged orthogonally to the longitudinal direction (6) and comprising a row of stop pins (25), which engage respective grooves 10 and aligned with one another along a horizontal axis orthogonal to the longitudinal direction (6) ;
b) a longitudinal movement device (5; 24) controlled by said control unit (19) so as to position, the one against the other, said stop pins (25) and a front or rear edge of the glass sheet to be cut (2) ;
- a second reference shoulder (B) arranged parallel to the longitudinal direction (6);
**characterized in that** said second reference shoulder (B) comprises a row of reference pins (32) aligned and spaced apart from one another along a horizontal axis parallel to said longitudinal direction (6) and constituting part of a second squaring system, comprising a transverse movement device (30) carried by said cutting bridge (12) and controlled by said control unit (19) so as to move the glass sheet to be cut (2) along an axis (31) transverse to the longitudinal direction (6) until resting a first side edge (33) of the glass sheet to be cut (2) against said second reference shoulder (B); said control unit (19) being configured so as to select and command the one or the other of said first and second squaring systems according to the shape of the glass sheet to be cut (2) and/or according to the length of at least one of the edges of the glass sheet to be cut (2).

2. The machine according to claim 1, **characterized in that** said transverse movement device (30) comprises a pushing member (35) movable parallel to said axis (31) and movable between:
- an active position, wherein the pushing member (35) is arranged above said support surface (4) at such a height as to engage and push a second side edge (36) of the glass sheet to be cut (2), opposite said first side edge (33); and
- an inactive position, wherein the pushing member (35) is outside the space provided on said support surface (4) for the thickness of the glass sheet to be cut (2).

3. The machine according to claim 2, **characterized in that** said pushing member (31) is defined by a roller having an axis (46), which is vertical when said pushing member (35) is arranged in the active position; said roller being idly rotatable around its axis (46), at least when it is arranged in the active position.

4. The machine according to any one of the preceding claims, **characterized in that** said transverse movement device (30) is arranged above said horizontal plane (4).

5. The machine according to claim 4, **characterized in that** said transverse movement device (30) is supported by said cutting bridge (12).

6. The machine according to any one of the claims from 1 to 3, **characterized in that** said transverse movement device is arranged below said support surface (4).

7. The machine according to claim 6, **characterized by** the fact of comprising a check bridge (24), which is movable along said longitudinal direction (6) under the control of said control unit (19), arranged below said support surface (4) and supporting said transverse movement device.

8. The machine according to claim 6 or 7, **characterized in that** said transverse movement device comprises a suction cup movable along said axis (31).

9. The machine according to any one of the preceding claims, **characterized in that** said transverse movement device (30) is arranged downstream of said cutting bridge (12), considering a longitudinal advancing direction from said inlet towards said outlet.

10. The machine according to any one of the preceding claims, **characterized in that** said axis (31) is defined by a horizontal rectilinear axis, orthogonal to said longitudinal direction (6) and eccentric to the cutting direction (20).

11. The machine according to one of the preceding claims, **characterized in that** two of said reference pins (32) are disposed on the opposite lateral sides of said cutting bridge (12).

## Patentansprüche

1. Eine Glasscheiben-Schneidemaschine (1), die folgendes aufweist:
- eine Haltemittelfläche (4) für mindestens eine zu schneidende Scheibe (2); wobei sich die Haltemittelfläche entlang einer horizontalen Längsrichtung (6) von einem Einlass zu einem Auslass erstreckt;
- eine Steuereinheit (19);
- eine Schneideinheit (18), die von der Steuereinheit (19) so gesteuert wird, dass sie mindestens einen Schneidvorgang an einer Schneidbrücke (12) in einer Schneidrichtung (20) quer zur Längsrichtung (6) ausführt;
- ein erstes Quadriersystem, das aufweist:
a) eine erste Referenzschulter (A), die orthogonal zur Längsrichtung (6) angeordnet ist und eine Reihe von Anschlagstiften (25) aufweist, die in entsprechende Nuten (10) eingreifen und entlang einer horizontalen Achse orthogonal zur Längsrichtung (6) aufeinander ausgerichtet sind;
b) eine Längsbewegungsvorrichtung (5; 24), die von der Steuereinheit (19) so gesteuert wird, dass sie die Anschlagstifte (25) und eine Vorder- oder Hinterkante der zu schneidenden Scheibe (2) gegeneinander positioniert;
- eine zweite Referenzschulter (B), die parallel zur Längsrichtung (6) angeordnet ist;
**dadurch gekennzeichnet, dass**
die zweite Referenzschulter (B) eine Reihe von Referenzstiften (32) umfasst, die entlang einer horizontalen Achse parallel zur Längsrichtung (6) ausgerichtet und voneinander beabstandet sind und einen Teil eines zweiten Quadrierungssystems bilden, das eine Vorrichtung zur Querbewegung (30) aufweist, die von der Schneidbrücke (12) getragen wird und von der Steuereinheit (19) so gesteuert wird, dass sie die zu schneidende Scheibe (2) entlang einer Achse (31) quer zur Längsrichtung (6) bewegt, bis eine erste Seitenkante (33) der zu schneidenden Scheibe (2) an der zweiten Bezugsschulter (B) anliegt; wobei die Steuereinheit (19) so ausgebildet ist, dass sie das eine oder das andere der ersten und zweiten Quadrierungssysteme in Abhängigkeit von der Form der zu schneidenden Scheibe (2) und/oder in Abhängigkeit von der Länge mindestens einer der Kanten der zu schneidenden Scheibe (2) auswählt und steuert.

2. Die Maschine nach Anspruch 1, **dadurch gekennzeichnet, dass** die transversale Bewegungsvorrichtung (30) ein parallel zur Achse (31) bewegliches Schiebeelement (35) aufweist und beweglich ist zwischen:
- einer aktiven Position, wobei das Schiebeelement (35) oberhalb der Haltemittel (4) in einer solchen Höhe angeordnet ist, dass es mit einer zweiten Seitenkante (36) der zu schneidenden Scheibe (2), die der ersten Seitenkante (33) gegenüberliegt; und
- einer inaktiven Position, wobei sich das Schiebeelement (35) außerhalb des Raums auf der Haltemittelfläche (4) für die Dicke der zu schneidenden Scheibe (2) vorgesehen ist.

3. Die Maschine nach Anspruch 2, **dadurch gekennzeichnet, dass** das Schiebeelement (31) durch eine Walze mit einer Achse (46) definiert ist, die vertikal ist, wenn das Schiebeelement (35) in der aktiven Position angeordnet ist; wobei die Walze um ihre Achse (46) frei drehbar ist, zumindest wenn sie in der aktiven Position angeordnet ist.

4. Die Maschine nach einem der vorhergehenden Ansprüche, **dadurch gekennzeichnet, dass** die Querbewegungsvorrichtung (30) oberhalb der horizontalen Ebene (4) angeordnet ist.

5. Die Maschine nach Anspruch 4, **dadurch gekennzeichnet, dass** die Querbewegungsvorrichtung (30) von der Schneidbrücke (12) gehalten wird.

6. Die Maschine nach einem der Ansprüche 1 bis 3, **dadurch gekennzeichnet dass** die Querbewegungsvorrichtung unterhalb der Haltemittelfläche (4) angeordnet ist.

7. Die Maschine nach Anspruch 6, **dadurch gekennzeichnet, dass** sie eine Kontrollbrücke (24) umfasst, die entlang der Längsrichtung (6) unter der Steuerung der Steuereinheit (19) entlang der Längsrichtung (6) beweglich ist, die unterhalb der Haltemittelfläche (4) angeordnet ist und die Haltemittel für die Querbewegungsvorrichtung trägt.

8. Die Maschine nach Anspruch 6 oder 7, **dadurch gekennzeichnet, dass** die Querbewegungsvorrichtung einen Saugnapf aufweist, der entlang der Achse (31) beweglich ist.

9. Die Maschine nach einem der vorhergehenden Ansprüche, **dadurch gekennzeichnet, dass** die Querbewegungsvorrichtung (30) stromabwärts der Schneidbrücke (12) angeordnet ist, unter Berücksichtigung einer Vorschubrichtung in Längsrichtung von dem Einlass in Richtung des Auslasses.

10. Die Maschine nach einem der vorhergehenden Ansprüche, **dadurch gekennzeichnet, dass** die Achse (31) durch eine horizontale geradlinige Achse definiert ist, die orthogonal zur genannten Längsrichtung (6) und exzentrisch zur Schneidrichtung (20) verläuft.

11. Die Maschine nach einem der vorhergehenden Ansprüche, **dadurch gekennzeichnet, dass** zwei der Bezugsstifte (32) an den gegenüberliegenden Seiten der Schneidbrücke (12) angeordnet sind.

## Revendications

1. Machine pour découper des feuilles de verre (1), comprenant :
- une surface de support (4) pour au moins une feuille de verre à couper (2) ; ladite surface de support s'étendant le long d'une direction longitudinale horizontale (6) d'une entrée à une sortie ;
- une unité de commande (19) ;
- une unité de coupe (18) commandée par ladite unité de commande (19) afin de réaliser au moins une opération de coupe au niveau d'un pont de coupe (12), dans une direction de coupe (20) transversale à la direction longitudinale (6) ;
- un premier système d'équerrage comprenant :
a) un premier épaulement de référence (A) agencé orthogonalement par rapport à la direction longitudinale (6) et comprenant une rangée de butées d'arrêt (25) qui mettent en prise des rainures 10 respectives et alignées les unes par rapport aux autres le long d'un axe horizontal orthogonal à la direction longitudinale (6) ;
b) un dispositif de déplacement longitudinal (5 ; 24) commandé par ladite unité de commande (19) afin de positionner, les unes contre les autres, lesdites butées d'arrêt (25) et un bord avant ou arrière de la feuille de verre à couper (2) ;
- un second épaulement de référence (B) agencé parallèlement à la direction longitudinale (6) ;
**caractérisée en ce que** ledit second épaulement de référence (B) comprend une rangée de broches de référence (32) alignées et espacées les unes des autres le long d'un axe horizontal parallèle à ladite direction longitudinale (6) et faisant partie d'un second système d'équerrage, comprenant un dispositif de déplacement transversal (30) porté par ledit pont de coupe (12) et commandé par ladite unité de commande (19) afin de déplacer la feuille de verre à couper (2) le long d'un axe (31) transversal à la direction longitudinale (6) jusqu'à appuyer un premier bord latéral (33) de la feuille de verre à couper (2) contre ledit second épaulement de référence (B) ; ladite unité de commande (19) étant configurée pour sélectionner et commander l'un ou l'autre desdits premier et second systèmes d'équerrage selon la forme de la feuille de verre à couper (2) et/ou selon la longueur d'au moins l'un des bords de la feuille de verre à couper (2).

2. Machine selon la revendication 1, **caractérisée en ce que** ledit dispositif de déplacement transversal (30) comprend un élément de poussée (35) mobile parallèlement audit axe (31) et mobile entre :
- une position active, dans laquelle l'élément de poussée (35) est agencé au-dessus de ladite surface de support (4) à une hauteur telle qu'il met en prise et pousse un second bord latéral (36) de la feuille de verre à couper (2), opposé audit premier bord latéral (33) ; et
- une position inactive, dans laquelle l'élément de poussée (35) est à l'extérieur de l'espace prévu sur ladite surface de support (4) pour l'épaisseur de la feuille de verre à couper (2).

3. Machine selon la revendication 2, **caractérisée en ce que** ledit élément de poussée (31) est défini par un rouleau ayant un axe (46), qui est vertical lorsque ledit élément de poussée (35) est agencé dans la position active ; ledit rouleau pouvant tourner de manière folle autour de son axe (46), au moins lorsqu'il est agencé dans la position active.

4. Machine selon l'une quelconque des revendications précédentes, **caractérisée en ce que** ledit dispositif de déplacement transversal (30) est agencé au-dessus dudit plan horizontal (4).

5. Machine selon la revendication 4, **caractérisée en ce que** le dispositif de déplacement transversal (30) est supporté par ledit pont de coupe (12).

6. Machine selon l'une quelconque des revendications 1 à 3, **caractérisée en ce que** ledit dispositif de déplacement transversal est agencé au-dessous de ladite surface de support (4).

7. Machine selon la revendication 6, **caractérisée en ce qu'**elle comprend un pont de rencontre (24) qui est mobile le long de ladite direction longitudinale (6) sous le contrôle de ladite unité de commande (19), agencé au-dessous de ladite surface de support (4) et supportant ledit dispositif de déplacement transversal.

8. Machine selon la revendication 6 ou 7, **caractérisée en ce que** ledit dispositif de déplacement transversal comprend une ventouse mobile le long dudit axe (31).

9. Machine selon l'une quelconque des revendications précédentes, **caractérisée en ce que** ledit dispositif de déplacement transversal (30) est agencé en aval dudit pont de coupe (12), en prenant en considération une direction d'avancement longitudinale de ladite entrée vers ladite sortie.

10. Machine selon l'une quelconque des revendications précédentes, **caractérisée en ce que** ledit axe (31) est défini par un axe rectiligne horizontal, orthogonal par rapport à ladite direction longitudinale (6) et excentrique par rapport à la direction de coupe (20) .

11. Machine selon l'une des revendications précédentes, **caractérisée en ce que** deux desdites broches de référence (32) sont disposées sur les côtés latéraux opposés dudit pont de coupe (12).
